# EUROPÄISCHE PATENTSCHRIFT

(11) **EP 1 586 830 B1**
(45) Veröffentlichungstag und Bekanntmachung des Hinweises auf die Patenterteilung: **21.11.2007**
(21) Anmeldenummer: 04008842.9
(22) Anmeldetag: 14.04.2004
(51) Int. Cl.: F24J 3/08

(54) **Verfahren zur Nutzung von Erdwärme**
Method of utilizing geothermal heat
Méthode d'utilisation de l'énergie géothermique

(43) Veröffentlichungstag der Anmeldung: 19.10.2005
(73) Patentinhaber: ENRO GeothermieEntwicklung GmbH, 14974 Ludwigsfelde (DE)
(72) Erfinder: Bund, Karlheinz Dr.,, 45133 Essen (DE); Elenz, Helmut, Dr.-Ing., 45133 Essen (DE)
(74) Vertreter: Rohmann, Michael

(56) Entgegenhaltungen:
- CH-A- 589 263
- US-A- 4 223 729
- US-A- 4 345 652
- US-A- 4 491 367

## Beschreibung

Die Erfindung betrifft ein Verfahren zur Nutzung von Erdwärme, beispielsweise zur Stromerzeugung. Die Erdwärme kann aber auch für andere Anwendungszwecke ausgenutzt werden. Zum Beispiel kann die Energie aus der Erdwärme an der Erdoberfläche zur Wasserstoffgewinnung verwendet werden.

Aus der Praxis ist es bekannt, zum Zwecke der Nutzung von Erdwärme zwei Bohrungen in das Erdreich bzw. in das Gestein einzubringen. Die erste Bohrung ist für eine Zuführungsleitung für ein Wärmeträgermedium vorgesehen, bei dem es sich in der Regel um Wasser handelt. Die zweite Bohrung steht für eine Förderleitung zum zurückführen des durch die Erdwärme erwärmten Wassers an die Erdoberfläche zur Verfügung. Das durch die erste Bohrung zugeführte Wasser durchströmt in der Tiefe das Erdreich bzw. das Gestein und wird dabei durch die Erdwärme aufgeheizt. Die Abstände der beiden Bohrlöcher betragen beispielsweise zwischen einem und zwei Kilometern. Über das zweite Bohrloch bzw. über die Förderleitung wird das erwärmte Wasser in der Regel mit Hilfe einer Pumpe gefördert. Die Wärme des an die Erdoberfläche beförderten Wassers wird dann normalerweise mit Hilfe eines Wärmetauschers auf einen Kreislauf übertragen, in dem Dampf für die Stromgewinnung erzeugt wird. Das dabei abgekühlte Wasser wird anschließend über das erste Bohrloch wieder in das Erdreich bzw. in das Gestein verpresst. Das bekannte Verfahren ist mit dem Nachteil verbunden, dass die Wärmeausbeute bezüglich der im Erdreich auf das Wärmeträgermedium übertragenen Wärme zu wünschen übrig lässt. Mit anderen Worten ist der Wirkungsgrad im Hinblick auf die Wärmeübertragung nicht zufrieden stellend.

Ein weiteres Verfahren ist aus US 4,345,652 bekannt, mit dem elektrische Energie aus Erdwärme gewonnen werden kann. Dabei wird ein geothermales Reservoir mit zwei Bohrungen erschlossen. Um die Permeabilität des Gesteins zu erhöhen, wird nach dem in US 4,345,652 beschriebenen Verfahren eine alkalische, alkoholhaltige wässrige Lösung in das geothermale Reservoir durch die erste Bohrung eingeleitet, um Strömungskanäle zu der zweiten Bohrung durch das Auflösen des Gesteins zu erzeugen.

Demgegenüber liegt der Erfindung das technische Problem zugrunde, ein Verfahren der vorstehend genannten Art anzugeben, mit dem auf einfache und effektive Weise Erdwärme in hoher Ausbeute genutzt werden kann, beispielsweise zur Stromerzeugung.

Zur Lösung dieses technischen Problems lehrt die Erfindung ein Verfahren zur Nutzung von Erdwärme, beispielsweise zur Stromerzeugung,
wobei ein Wärmeträgermedium durch zumindest eine Zuführungsleitung in das Erdreich eingeführt wird,
wobei das Wärmeträgermedium aus zumindest einer Austrittsöffnung über einen Strömungsabstand s das Erdreich durchdringend zu zumindest einer Abführungsöffnung geführt wird,
wobei die Abführungsöffnung um eine Tiefendifferenz Δt tiefer als die Austrittsöffnung angeordnet ist, welche Tiefendifferenz Δt zumindest 1/20 des Strömungsabstands s beträgt
und wobei das erwärmte Wärmeträgermedium über zumindest eine an die Abführungsöffnung angeschlossene Förderleitung wieder zur Erdoberfläche zurückgeführt wird.

Erdreich meint im Rahmen der Erfindung vor allem Gestein und insbesondere kristallines Gestein, wie beispielsweise Granit oder Gneise. Mit Erdreich sind aber auch hochpermeable Gesteinsschichten, so genannte Aquifere gemeint. Der Begriff Erdreich umfasst im Rahmen der Erfindung fernerhin auch so genannte Störungszonen. Dabei handelt es sich um Bruchzonen oder Bruchflächen, die in Sedimentgestein wie kristallinem Gestein auftreten können.

Die Austrittsöffnungen und die Abführungsöffnungen für das Wärmeträgermedium sind zweckmäßigerweise in einer Tiefe von 1500 bis 7000, vorzugsweise von 2000 bis 7000 und bevorzugt von 3000 bis 7000 m angeordnet. Nach einer sehr bevorzugten Ausführungsform der Erfindung sind die Austrittsöffnungen und/oder die Abführungsöffnungen in einer Tiefe von 3500 bis 6000 m vorgesehen.

Zweckmäßigerweise wird ein flüssiges Wärmeträgermedium durch die Zuführungsleitung zugeführt. Nach besonders bevorzugter Ausführungsform der Erfindung wird Wasser als Wärmeträgermedium eingesetzt.

Es liegt im Rahmen der Erfindung, dass eine Austrittsöffnung und eine Abführungsöffnung mit einem gegenseitigen Strömungsabstand s von 200 bis 800 m, vorzugsweise von 300 bis 700 m voneinander angeordnet werden. Zweckmäßigerweise beträgt der Strömungsabstand s zwischen einer Austrittsöffnung und einer Abführungsöffnung 350 bis 650 m, beispielsweise 500 m.

Nach besonders bevorzugter Ausführungsform der Erfindung ist eine Abführungsöffnung um eine Tiefendifferenz Δt tiefer als eine Austrittsöffnung angeordnet, welche Tiefendifferenz Δt erfindungsgemäß zumindest 1/20, vorzugsweise 1/15 und bevorzugt zumindest 1/10 des Strömungsabstandes s beträgt.

Nach einer bevorzugten Ausführungsform, der im Rahmen der Erfindung ganz besondere Bedeutung zukommt tritt das Wärmeträgermedium über eine Mehrzahl von in zumindest einer linearen Reihe angeordneten Austrittsöffnungen in das Erdreich aus. Zweckmäßigerweise ist eine Mehrzahl von Austrittsöffnungen an eine Zuführungsleitung angeschlossen. Es liegt im Rahmen der Erfindung, dass das Wärmeträgermedium von den Austrittsöffnungen über den Strömungsabstand s das Erdreich durchdringend zu in zumindest einer linearen Reihe angeordneten Abführungsöffnungen geführt wird. Es liegt weiterhin im Rahmen der Erfindung, dass das erwärmte Wärmeträgermedium über zumindest eine an die Abführungsöffnungen angeschlossene Förderleitung wieder zur Erdoberfläche zurückgeführt wird. Dabei ist zweckmäßigerweise eine Mehrzahl von Abführungsöffnungen an eine einzige Förderleitung angeschlossen.

Dass die Austrittsöffnungen bzw. Abführungsöffnungen jeweils in einer linearen Reihe angeordnet sind, meint im Rahmen der Erfindung, dass die Austrittsöffnungen bzw. die Abführungsöffnungen auf einer Geraden bzw. im Wesentlichen auf einer Geraden angeordnet sind. Die Öffnungen müssen im Rahmen der Erfindung also nicht präzise bzw. nicht mathematisch präzise auf einer Geraden angeordnet sein, sondern können auch gleichsam wie Messwertstreuungen um eine Ausgleichsgerade platziert sein. Es liegt im Rahmen der Erfindung, dass zumindest ein Teil der in einer linearen Reihe angeordneten Abführungsöffnungen auf einem tieferen Niveau bzw. um eine Tiefendifferenz Δt tiefer angeordnet sind, als die Austrittsöffnungen. Vorzugsweise sind alle in einer linearen Reihe angeordneten Abführungsöffnungen auf einem tieferen Niveau bzw. um eine Tiefendifferenz Δt tiefer angeordnet, als die Austrittsöffnungen. Zumindest die Hälfte der in einer linearen Reihe angeordneten Abführungsöffnungen ist nach einer Ausführungsform auf einem tieferem Niveau bzw. um die Tiefendifferenz Δt tiefer angeordnet, als die Austrittsöffnungen. Wie oben bereits ausgeführt, beträgt die Tiefendifferenz Δt dabei erfindungsgemäß zumindest 1/20 des Strömungsabstandes s, vorzugsweise zumindest 1/15 und besonders bevorzugt zumindest 1/10 des Strömungsabstandes s.

Eine sehr bevorzugte Ausführungsform der Erfindung ist dadurch gekennzeichnet, dass eine Mehrzahl von Austrittsöffnungen an einer einzigen Zuführungsleitung angeschlossen ist. Dabei können alle Austrittsöffnungen einer linearen Reihe lediglich an eine einzige Zuführungsleitung angeschlossen sein. Es liegt im Rahmen der Erfindung, dass Austrittsöffnungen und Zuführungsleitung gleichsam rechenförmig bzw. rechenbesenförmig angeordnet sind. Dabei bildet die Zuführungsleitung den Rechenstiel und die einzelnen den Austrittsöffnungen zugeordneten Austrittsleitungen bilden die Zinken des Rechens bzw. des Rechenbesens. Vorzugsweise sind zumindest zwei Austrittsöffnungen einer linearen Reihe an eine einzige Zuführungsleitung angeschlossen.

Eine bevorzugte Ausführungsform der Erfindung ist dadurch gekennzeichnet, dass die Austrittsöffnungen in einer sich über eine Strecke von 500 m bis 1500 m, vorzugsweise von 750 bis 1250 m erstreckenden linearen Reihe angeordnet werden. Besonders bevorzugt ist eine Länge von 800 m bis 1200 m, beispielsweise eine Länge von 1000 m für eine lineare Reihe von Austrittsöffnungen. Die vorstehend für eine lineare Reihe von Austrittsöffnungen angegebenen Längen gelten vorzugsweise auch für die Länge einer linearen Reihe von Abführungsöffnungen. Es liegt im Rahmen der Erfindung, dass die Austrittsöffnungen und/oder die Abführungsöffnungen in einer linearen Reihe gleichmäßig verteilt sind und insbesondere gleiche Abstände bzw. im Wesentlichen gleiche Abstände voneinander aufweisen.

Nach bevorzugter Ausführungsform der Erfindung wird eine lineare Reihe von Austrittsöffnungen und eine lineare Reihe von Abführungsöffnungen mit einem Strömungsabstand s von 200 m bis 800 m, vorzugsweise von 300 m bis 700 m voneinander angeordnet. Zweckmäßigerweise beträgt der Strömungsabstand s zwischen den beiden linearen Reihen 350 m bis 650 m, beispielsweise 500 m.

Es liegt im Rahmen der Erfindung, dass das Erdreich zwischen einer linearen Reihe von Austrittsöffnungen und einer linearen Reihe von Abführungsöffnungen zur Erzeugung von Strömungskanälen für das Wärmeträgermedium künstlich aufgebrochen wird. Durch dieses künstliche Aufbrechen werden neue Hohlräume (Risse, Rissflächen, Klüfte, Poren und dergleichen) im Erdreich geschaffen bzw. bestehende Hohlräume erweitert, so dass Strömungskanäle zur Verfügung stehen, durch die das Wärmeträgermedium von den Austrittsöffnungen zu den Abführungsöffnungen strömen kann. Ein solches künstliches Aufbrechen findet insbesondere statt, wenn es sich bei dem Erdreich um Gestein bzw. kristallines Gestein handelt. Das künstliche Aufbrechen dieses kristanllinen Gesteins ist auch unter der Bezeichnung "Hot-Dry-Rock-Verfahren" (HDR-Verfahren) bekannt. Zweckmäßigerweise wird im Rahmen der Erfindung zum künstlichen Aufbrechen des Erdreichs bzw. des Gesteins das an sich bekannte sogenannte "Hydraulic-Fracturing-Verfahren" angewendet. Dabei wird eine Flüssigkeit, vorzugsweise Wasser unter hohem Druck in das Erdreich bzw. in das Gestein verpresst. Durch diesen hohen Druck und die im Gestein herrschenden Spannungen können dann Risse bzw. Rissflächen erzeugt werden oder aber bestehende Risse bzw. Rissflächen aufgeweitet werden. Durch das künstliche Aufbrechen des Erdreiches bzw. des Gesteins wird die hydraulische Druchlässigkeit des Erdreichs erhöht. Dadurch kann die Fließrate des Wärmeträgermediums über den Strömungsabstand s zwischen einer Austrittsöffnung und einer Abführungsöffnung gesteigert werden. Das erfindungsgemäße Verfahren wird bevorzugt mit der Maßgabe durchgeführt, dass über den Strömungsabstand s zwischen einer Austrittsöffnung und einer Abführungsöffnung eine Mindestfließrate von 50 m³/h verwirklicht werden kann.

Nach einer Ausführungsform der Erfindung ist eine Mehrzahl von Abführungsöffnungen an eine einzige Förderleitung angeschlossen. Vorzugsweise wird eine rechenförmige bzw. rechenbesenförmige Anordnung des Aggregates aus Förderleitung und aus den Abführungsöffnungen zugeordneten Abführungsleitungen realisiert. Die Förderleitung bildet dabei gleichsam den Rechenstiel und die Abführungsleitungen mit ihren Abführungsöffnungen bilden die Zinken des Rechens bzw. Rechenbesens.

Zweckmäßigerweise sind zumindest zwei Abführungsleitungen bzw. Abführungsöffnungen an eine einzige Förderleitung angeschlossen.

Eine sehr bevorzugte Ausführungsform des erfindungsgemäßen Verfahrens ist dadurch gekennzeichnet, dass die Austrittsöffnungen und die Abführungsöffnungen mit der Maßgabe angeordnet werden, dass jeder Austrittsöffnung zumindest eine Abführungsöffnung und/oder jeder Abführungsöffnung zumindest eine Austrittsöffnung zugeordnet ist. Vorzugsweise ist jeder Austrittsöffnung einer linearen Reihe von Austrittsöffnungen eine einzige tiefer liegende Abführungsöffnung in der benachbarten linearen Reihe von Abführungsöffnungen zugeordnet und umgekehrt. Grundsätzlich liegt es aber auch im Rahmen der Erfindung, dass eine Austrittsöffnung in einer linearen Reihe von Austrittsöffnungen ein bis fünf tiefer liegende Abführungsöffnungen in einer benachbarten linearen Reihe von Abführungsöffnungen zugeordnet sind und umgekehrt.

Dadurch, dass die Abführungsöffnungen um eine erfindungsgemäße Tiefendifferenz Δt tiefer angeordnet sind als die Austrittsöffnungen kann eine besonders vorteilhafte Strömung mit effektivem Wärmeaustausch verwirklicht werden. Nach einer Ausführungsform der Erfindung liegen die Abführungsöffnungen bei einem Strömungsabstand s von 200 bis 800 m, vorzugsweise mindest 20 m tiefer, bevorzugt mindestens 50 m tiefer als die Austrittsöffnungen.

Eine lineare Reihe von Austrittsöffnungen ist zweckmäßigerweise parallel oder im Wesentlichen parallel zu zumindest einer tieferliegenden linearen Reihe von Abführungsöffnungen angeordnet. Im Wesentlichen parallel meint dabei vorzugsweise, dass zwischen einer linearen Reihe von Austrittsöffnungen und einer tieferliegenden linearen Reihe von Abführungsöffnungen höchstens ein Winkel von 30°, vorzugsweise höchstens ein Winkel von 20° und sehr bevorzugt höchstens ein Winkel von 15° gebildet wird.

Eine ganz besonders bevorzugte Ausführungsform des erfindungsgemäßen Verfahrens ist dadurch gekennzeichnet, dass eine mittige tiefer liegende lineare Reihe von Abführungsöffnungen vorgesehen ist und dass rechts und links von dieser tiefer liegenden mittigen linearen Reihe jeweils eine auf höherem Niveau liegende lineare Reihe von Austrittsöffnungen vorgesehen ist. Dabei sind die drei genannten linearen Reihen zweckmäßigerweise parallel oder im Wesentlichen parallel zueinander angeordnet. Außerdem hat vorzugsweise die linke lineare Reihe von Austrittsöffnungen den gleichen Strömungsabstand s wie die rechte lineare Reihe von Austrittsöffnungen zu der mittigen tieferliegenden linearen Reihe von Abführungsöffnungen.

Es liegt im Rahmen der Erfindung, dass die Anzahl und die Anordnung der Austrittsöffnungen und der Abführungsöffnungen sowie die Tiefendifferenz Δt zwischen Abführungsöffnungen und Austrittsöffnungen mit der Maßgabe ausgewählt wird, dass das Wärmeträgermedium über den Strömungsabstand s mit konstanter Geschwindigkeit oder mit im Wesentlichen konstanter Geschwindigkeit von den Austrittsöffnungen zu den tiefer liegenden Abführungsöffnungen strömt. Zweckmäßigerweise wird der durch die Austrittsöffnungen zugeführte Volumenstrom und der durch die Abführungsöffnungen abgeförderte Volumenstrom mit der Maßgabe eingestellt, dass das Wärmeträgermedium über den Strömungsabstand s mit konstanter Geschwindigkeit oder im Wesentlichen konstanter Geschwindigkeit strömt. Vorzugsweise werden auch die durch das künstliche Aufbrechen von Erdreich erzeugten Strömungskanäle so eingerichtet, dass Wärmeträgermedium über den Strömungsabstand s mit der konstanten Geschwindigkeit oder mit im Wesentlichen konstanter Geschwindigkeit strömt. Überraschenderweise kann im Rahmen des erfindungsgemäßen Verfahrens eine konstante Strömungsgeschwindigkeit sehr einfach und problemlos eingerichtet werden. Das hat besondere Vorteile.

Vorzugsweise wird das Wärmeträgermedium mit zumindest einer Fördereinrichtung in die Zuführungsleitung eingepresst bzw. eingedrückt und/oder wird das Wärmeträgermedium mit zumindest einer Fördereinrichtung über die Förderleitung wieder an die Erdoberfläche befördert. Bei einer Fördereinrichtung handelt es sich zweckmäßigerweise um eine geeignete Pumpe.

Das aufgewärmte bzw. aufgeheizte Wärmeträgermedium wird an der Erdoberfläche nach sehr bevorzugter Ausführungsform der Erfindung zur Stromerzeugung bzw. zur Gewinnung von elektrischer Energie verwendet. Dabei wird die von dem Wärmeträgermedium beförderte Wärmeenergie in mechanische Energie umgewandelt. Dazu wird zweckmäßigerweise Dampf bei hoher Temperatur und hohem Druck über zumindest eine Turbine geleitet. Dabei wird der Dampf abgekühlt und entspannt. Die Turbine treibt einen Generator an, mit dem die mechanische Energie in elektrische Energie umgewandelt wird. Nach einer Ausführungsform der Erfindung wird für das Medium, das dampfförmig eine Turbine antreiben soll, ein Medium eingesetzt, das einen geringeren Siedepunkt als Wasser hat. Vorzugsweise handelt es sich bei diesem Medium um eine organische Flüssigkeit mit niedrigerem Siedepunkt als Wasser, beispielsweise um einen Kohlenwasserstoff wie n-Pentan oder Isobutan. Zweckmäßigerweise wird in einem Wärmetauscher die Wärmeenergie von dem Wärmeträgermedium auf das die Turbine antreibende Medium übertragen. Vorzugsweise zirkuliert die organische Flüssigkeit in einem geschlossenen Kreislauf. Das bei der Wärmeübertragung abgekühlte Wärmeträgermedium wird anschließend bevorzugt wieder in die Zuführungsleitung eingeleitet bzw. eingepresst. Nach besonders bevorzugter Ausführungsform der Erfindung wird also das Wärmeträgermedium, vorzugsweise Wasser, in einem geschlossenen Kreislauf geführt.

Der Erfindung liegt die Erkenntnis zugrunde, dass mit dem erfindungsgemäßen Verfahren ein sehr effektiver Wärmeaustausch bzw. eine sehr effektive Übertragung von Erdwärme auf das Wärmeträgermedium möglich ist. Mit anderen Worten ist die Wärmeausbeute bezüglich der im Erdreich auf das Wärmeträgermedium übertragenen Wärme überraschend hoch. Die hohe Wärmeausbeute kann insbesondere deshalb erreicht werden, weil das Wärmeträgermedium über den Strömungsabstand s, das heißt von den Austrittsöffnungen zu den tiefer liegenden Abführungsöffnungen mit konstanter Geschwindigkeit oder im Wesentlichen konstanter Geschwindigkeit strömen kann. Außerdem ist das erfindungsgemäße Verfahren im Vergleich zu aus dem Stand der Technik bekannten Verfahren relativ einfach und ohne großen Mehraufwand durchführbar. Von besonderem Vorteil ist fernerhin, dass im Rahmen des erfindungsgemäßen Verfahrens ein hoher Wirkungsgrad bei der Gewinnung von elektrischer Energie aus Erdwärme erreichbar ist. Hervorzuheben ist außerdem, dass die erfindungsgemäße Energiegewinnung bzw. Energieumwandlung ausgesprochen umweltfreundlich ist. Vor allem Kohlendioxidemissionen fallen bei der Nutzung von Erdwärme nicht an und somit wird bei der Anwendung des erfindungsgemäßen Verfahrens ein wesentlicher Beitrag zum Klimaschutz geleistet.
Nachfolgend wird die Erfindung anhand einer lediglich ein Ausführungsbeispiel darstellenden Zeichnung näher erläutert. Es zeigen in schematischer Darstellung:
- **Fig. 1**: einen Schnitt durch eine erfindungsgemäße Vorrichtung zur Durchführung des erfindungsgemäßen Verfahrens und
- **Fig. 2**: schematisch die Verteilung von Austrittsöffnungen und Abführungsöffnungen.

Die Figuren zeigen eine Vorrichtung zur Durchführung des erfindungsgemäßen Verfahrens zur Nutzung von Erdwärme, insbesondere zur Stromerzeugung. Ein nicht näher dargestelltes Wärmeträgermedium wird durch eine Zuführungsleitung 1 in das Erdreich eingeführt. Bei dem Wärmeträgermedium handelt es sich vorzugsweise um Wasser. Im Ausführungsbeispiel nach den Figuren sind im Übrigen zwei Zuführungsleitungen 1 vorgesehen. In einer Tiefe t, die im Ausführungsbeispiel 3500 m betragen mag, tritt dann das über eine Zuführungsleitung 1 zugeführte Wärmeträgermedium über eine Mehrzahl von in jeweils einer linearen Reihe angeordneten Austrittsöffnungen 2 in das Erdreich aus. Vorzugsweise und im Ausführungsbeispiel sind die in einer linearen Reihe angeordneten Austrittsöffnungen 2 an lediglich eine einzige Zuführungsleitung 1 angeschlossen. Zweckmäßigerweise ist eine nicht näher dargestellte rechenartige Anordnung von Zuführungsleitung 1 und Austrittsöffnungen 2 bzw. den Austrittsöffnungen 2 zugeordneten nicht dargestellten Austrittsleitungen vorgesehen. Dabei bildet die Zuführungsleitung 1 gleichsam den Rechenstiel und die Austrittsöffnungen 2 bzw. die nicht dargestellten den Austrittsöffnungen 2 zugeordneten Austrittsleitungen bilden die Zinken des Rechens.

Das Wärmeträgermedium strömt von den Austrittsöffnungen 2 über einen Strömungsabstand s durch das Erdreich und wird dort durch die Erdwärme gleichsam erwärmt bzw. aufgeheizt. Das Wärmeträgermedium strömt dann zu den ebenfalls in einer linearen Reihe angeordneten Abführungsöffnungen 3. Zweckmäßigerweise sind die in der linearen Reihe angeordneten Abführungsöffnungen 3 an lediglich eine einzige Förderleitung 4 angeschlossen. Durch die Förderleitung 4 wird das erwärmte Wärmeträgermedium wieder an die Erdoberfläche 5 zurückbefördert. Vorzugsweise ist ebenfalls eine rechenartige Anordnung von Förderleitung 4 und Abführungsöffnungen 3 bzw. den Abführungsöffnungen 3 zugeordneten nicht dargestellten Abführungsleitungen verwirklicht.

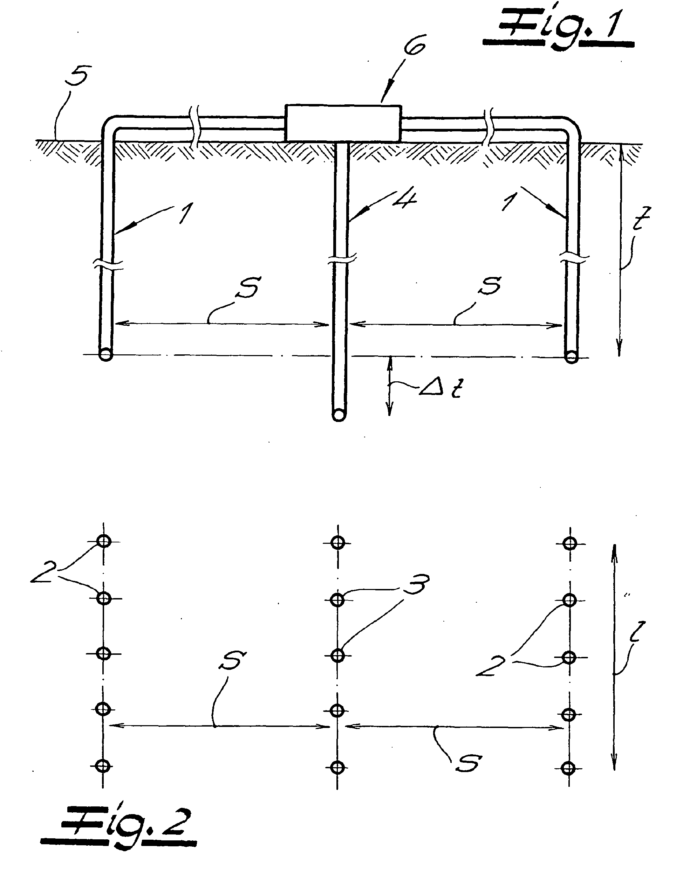

In der Fig. 1 ist erkennbar, dass erfindungsgemäß die Abführungsöffnungen 3 tiefer liegen bzw. auf einem tieferen Niveau angeordnet sind, als die Austrittsöffnungen 2. Die Differenz Δt, um welche diese Abführungsöffnungen 3 tiefer liegen, beträgt bei einem Strömungsabstand s von 500 m bevorzugt mindestens 50 m.

In der Fig. 2 ist erkennbar, dass vorzugsweise und im Ausführungsbeispiel eine mittige lineare Reihe von Abführungsöffnungen 3 vorgesehen ist und dass rechts und links von dieser mittigen linearen Reihe jeweils eine lineare Reihe von Austrittsöffnungen 2 angeordnet ist. Bevorzugt sind alle drei linearen Reihen parallel oder im Wesentlichen parallel zueinander angeordnet.

Die Länge I der Reihen von Austrittsöffnungen 2 bzw. Abführungsöffnungen 3 beträgt vorzugsweise und im Ausführungsbeispiel 1000 m. Der Fig. 2 ist auch entnehmbar, dass die Austrittsöffnungen 2 bzw. Abführungsöffnungen 3 in den linearen Reihen gleichmäßig verteilt sind und gleiche Abstände zueinander aufweisen. Nach ganz besonders bevorzugter Ausführungsform und im Ausführungsbeispiel (Fig. 2) ist eine Austrittsöffnung 2 einer linearen Reihe jeweils eine Abführungsöffnung 3 zugeordnet. Das erwärmte Trägermedium wird vorzugsweise mit Hilfe von zumindest einer Pumpe durch die Förderleitung 4 an die Erdoberfläche 5 bzw. zu einer Stromerzeugungseinrichtung 6 befördert. In dieser Stromerzeugungseinrichtung 6 wird in nicht näher dargestellter Weise die von dem Wärmeträgermedium beförderte Wärme (Erdwärme) in mechanische Energie umgewandelt. Dazu wird die Wärme in einem Wärmetauscher zweckmäßigerweise an eine organische Flüssigkeit übertragen, die einen niedrigeren Siedepunkt besitzt als Wasser. Dadurch wird die organische Flüssigkeit verdampft und der Dampf wird bei hoher Temperatur und hohem Druck über zumindest eine Turbine geleitet. Die Turbine treibt einen Generator an, mit dem die mechanische in elektrische Energie umgewandelt wird. Das organische Medium wird bei diesem Vorgang abgekühlt und entspannt und anschließend zweckmäßigerweise wieder dem Wärmetauscher zugeführt, in der es mit Hilfe des Wärmeträgermediums erwärmt wird. Das nach dem Wärmetauscher abgekühlte Wärmeträgermedium wird anschließend wieder in Zuführungsleitungen 1 zurückgeführt, was in der Fig. 1 durch entsprechende Pfeile veranschaulicht wurde. Das Wärmeträgermedium wird somit in einem geschlossenen Kreislauf geführt.

## Patentansprüche

1. Verfahren zur Nutzung von Erdwärme, insbesondere zur Stromerzeugung,
wobei ein Wärmeträgermedium durch zumindest eine Zuführungsleitung (1) in das Erdreich eingeführt wird,
wobei das Wärmeträgermedium aus zumindest einer Austrittsöffnung (2) über einen Strömungsabstand s das Erdreich durchdringend zu zumindest einer Abführungsöffnung (3) geführt wird,
wobei die Abführungsöffnung (3) um eine Tiefendifferenz Δt tiefer als die Austrittsöffnung (2) angeordnet ist, welche Tiefendifferenz Δt zumindest 1/20 des Strömungsabstandes s beträgt.
und wobei das erwärmte Wärmeträgermedium über zumindest eine an die Abführungsöffnung (3) angeschlossene Förderleitung (4) wieder zur Erdoberfläche (5) zurückgeführt wird.

2. Verfahren nach Anspruch 1, wobei als Wärmeträgermedium Wasser eingesetzt wird.

3. Verfahren nach einem der Ansprüche 1 oder 2, wobei eine Austrittsöffnung (2) und eine Abführungsöffnung (3) mit einem gegenseitigen Strömungsabstand (s) von 200 bis 800 m, vorzugsweise von 300 bis 700 m voneinander angeordnet werden.

4. Verfahren nach einem der Ansprüche 1 bis 3, wobei das Wärmeträgermedium über eine Mehrzahl von in zumindest einer linearen Reihe angeordneten Austrittsöffnungen (2) in das Erdreich austritt.

5. Verfahren nach einem der Ansprüche 1 bis 4, wobei das Wärmeträgermedium von den Austrittsöffnungen (2) über den Strömungsabstand s das Erdreich durchdringend zu in zumindest einer linearen Reihe angeordneten Abführungsöffnungen (3) geführt wird.

6. Verfahren nach einem der Ansprüche 1 bis 5, wobei das Erdreich zwischen Austrittsöffnungen (2) und Abführungsöffnungen (3) zur Erzeugung von Strömungskanälen für das Wärmeträgermedium künstlich aufgebrochen wird.

7. Verfahren nach einem der Ansprüche 1 bis 6, wobei die Austrittsöffnungen (2) und die Abführungsöffnungen (3) mit der Maßgabe angeordnet werden, dass jeder Austrittsöffnung (2) zumindest eine Abführungsöffnung (3) und/oder jeder Abführungsöffnung (3) zumindest eine Austrittsöffnung (2) zugeordnet ist.

8. Verfahren nach einem der Ansprüche 1 bis 7, wobei zumindest eine lineare Reihe von Austrittsöffnungen (2) parallel oder im Wesentlichen parallel zu zumindest einer tiefer liegenden linearen Reihe von Abführungsöffnungen (3) angeordnet wird.

9. Verfahren nach einem der Ansprüche 1 bis 8, wobei eine mittige lineare Reihe von Abführungsöffnungen (3) vorgesehen wird und wobei rechts und links von dieser mittigen linearen Reihe jeweils eine höher liegende lineare Reihe von Austrittsöffnungen (2) vorgesehen wird.

## Claims

1. A method of using geothermal energy, particularly for electricity generation,
wherein a heat transfer medium is introduced into the ground by at least one supply line (1),
wherein the heat transfer medium is conducted from at least one outlet opening (2) across a flow distance s penetrating the ground to at least one discharge opening (3),
wherein the discharge opening (3) is disposed deeper than the outlet opening (2) by a depth difference Δt, said depth difference Δt being at least 1/20 of the flow distance s
and wherein the heated heat transfer medium is carried back to the earth's surface (5) by at least one transport line (4) connected to the discharge opening (3).

2. The method according to claim 1, wherein water is used as the heat transfer medium.

3. The method according to one of the claims 1 or 2, wherein an outlet opening (2) and a discharge opening (3) are disposed with a mutual flow distance (s) from one another of 200 to 800 m, preferably 300 to 700 m.

4. The method according to one of the claims 1 to 3, wherein the heat transfer medium escapes into the ground via a multiplicity of outlet openings (2) disposed in at least one linear row.

5. The method according to one of the claims 1 to 4, wherein the heat transfer medium is carried from the outlet openings (2) across the flow distance s penetrating the ground to discharge openings (3) disposed in at least one linear row.

6. The method according to one of the claims 1 to 5, wherein the ground between the outlet openings (2) and the discharge openings (3) is opened up artificially to produce flow ducts for the heat transfer medium.

7. The method according to one of the claims 1 to 6, wherein the outlet openings (2) and the discharge openings (3) are disposed such that each outlet opening (2) is assigned at least one discharge opening (3) and/or each discharge opening (3) is assigned at least one outlet opening (2).

8. The method according to one of the claims 1 to 7, wherein at least one linear row of outlet openings (2) is disposed essentially parallel to at least one deeper linear row of discharge openings (3).

9. The method according to one of the claims 1 to 8, wherein a central, linear row of discharge openings (3) is provided and wherein a higher linear row of outlet openings (2) is provided both to the right and left of this.

## Revendications

1. Procédé pour l'exploitation géothermique, en particulier pour la production de courant électrique, un fluide caloporteur étant introduit dans le sol par une conduite d'amenée (1),
le fluide caloporteur étant guidé depuis un orifice de sortie (2) à une distance d'écoulement s en traversant le sol en direction d'au moins un orifice d'évacuation (3),
l'orifice d'évacuation (3) étant disposé plus profond que l'orifice de sortie (2) de l'équivalent d'une différence de profondeur Δt**,** différence de profondeur Δt étant d'au moins 1/20 de la distance d'écoulement s
le fluide caloporteur chauffé étant à nouveau ramené à la surface de la terre (5)par au moins une conduite d'acheminement (4) raccordée à l'orifice d'évacuation (3).

2. Procédé selon la revendication 1, **caractérisé en ce que** le fluide caloporteur utilisé est de l'eau.

3. Procédé selon l'une des revendications 1 ou 2, où un orifice de sorte (2) et un orifice d'évacuation (3) sont disposés à une distance d'écoulement réciproque (s) comprise entre 200 et 800 m, de préférence 300 et 700 m.

4. Procédé selon l'une des revendications 1 à 3, où le fluide caloporteur débouche dans le sol par une pluralité d'orifices de sortie (2) disposés au moins dans une rangée linéaire.

5. Procédé selon l'une des revendications 1 à 4, le fluide caloporteur étant guidé depuis les orifices de sortie (2) sur la distance d'écoulement s en traversant le sol en direction d'orifices d'évacuation (3) disposés au moins dans une rangée linéaire.

6. Procédé selon l'une des revendications 1 à 5, le sol entre les ouvertures de sortie (2) et les ouvertures d'évacuation (3) étant ouvert artificiellement pour la génération de canaux d'écoulement pour le fluide caloporteur.

7. Procédé selon l'une des revendications 1 à 6, les orifices de sortie (2) et les orifices d'évacuation (3) étant disposés de sorte que chaque ouverture de sortie (2) soit au moins associée à un orifice d'évacuation (3) et/ou chaque orifice d'évacuation (3) soit au moins associé à un orifice de sortie (2).

8. Procédé selon l'une des revendications 1 à 7, au moins une rangée linéaire d'orifices de sortie (2) étant disposée parallèlement ou sensiblement parallèlement à au moins une rangée linéaire d'orifices d'évacuation (3).

9. Procédé selon l'une des revendications 1 à 8, une rangée linéaire médiane d'orifices d'évacuation (3) étant prévue et à droite et à gauche de cette rangée linéaire médiane, respectivement une rangée linéaire d'orifices de sortie (2) étant prévue.
